(19) Europäisches Patentamt
European Patent Office
Office européen des brevets

(11) **EP 3 253 655 B1**

(12) **FASCICULE DE BREVET EUROPEEN**

(45) Date de publication et mention
de la délivrance du brevet:
**24.06.2020 Bulletin 2020/26**

(21) Numéro de dépôt: **16703472.7**

(22) Date de dépôt: **02.02.2016**

(51) Int Cl.:
***B64G 1/34*** *(2006.01)*   ***B64G 1/62*** *(2006.01)*
***B64G 1/22*** *(2006.01)*   ***B64G 1/24*** *(2006.01)*

(86) Numéro de dépôt international:
**PCT/EP2016/052173**

(87) Numéro de publication internationale:
**WO 2016/124591 (11.08.2016 Gazette 2016/32)**

(54) **SYSTÈME D'AÉROFREINAGE POUR DÉSORBITATION DE SATELLITE**

RÜCKHOLSYSTEM FÜR EINEN SATELLITEN MIT ATMOSPHÄRENBREMSUNG

AEROBRAKING SATELLITE DEORBITING SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.02.2015 FR 1550829**

(43) Date de publication de la demande:
**13.12.2017 Bulletin 2017/50**

(73) Titulaire: **ArianeGroup SAS**
**75015 Paris (FR)**

(72) Inventeurs:
• **RASSE, Benjamin**
**33000 Bordeaux (FR)**
• **DAMIANO, Patrice**
**31400 Toulouse (FR)**

(74) Mandataire: **Brevalex**
**95, rue d'Amsterdam**
**75378 Paris Cedex 8 (FR)**

(56) Documents cités:
WO-A1-02/02402   FR-A1- 2 897 842
FR-A1- 2 897 843   US-B1- 6 830 222

**Description**

Domaine de l'invention

La présente invention se situe dans le domaine des structures d'aérofreinage pour désorbitation de satellites et prévoit un système à cet effet.

Dans le domaine des satellites, il existe de plus en plus de réglementation ou de guides de bonnes pratiques qui imposent aux opérateurs d'éliminer leurs satellites de leur orbite après leur fin de vie opérationnelle, fin de vie planifiée ou accidentelle.

La présente invention concerne plus particulièrement les satellites en orbite dite basse, au-dessous de 2000 km, pour laquelle après leur fin de vie, les satellites doivent être soit désorbités, soit envoyé en orbite dite « cimetière » au-dessus de 2000 km. Cette opération doit par ailleurs être effectuée en moins de 25 ans.

Arrière plan technologique

Aucun satellite aujourd'hui n'est capable de satisfaire cette exigence sans embarquer un système dédié de désorbitation de masse importante ou sans utiliser une fraction importante de l'hydrazine embarquée (environ 30 %) pour amener le satellite en position de désorbitation.

Parmi les diverses solutions possibles pour les opérations de désorbitation, on a proposé des voiles d'aérofreinage, c'est à dire des surfaces qui utilisent l'atmosphère résiduelle présente en orbite basse comme frein aérodynamique pour freiner un objet et le ralentir, donc au final diminuer l'altitude de son orbite.

Ce type de solution est dédiée à l'opération de désorbitation des satellites.

Ces surfaces utilisent des structures ultralégères, arachnéennes ou appelées selon le terme anglais "gossamer" connues dans l'industrie spatiale.

Le principe d'aérofreinage est par exemple décrit dans les documents FR 2 897 842 A1 qui porte sur le principe de désorbitation par structure d'aérofreinage et FR 2 897 843 A1 qui décrit une solution technologique pour la réalisation d'une telle voile. Ces deux documents mettent l'accent sur la relation entre l'efficacité de la structure d'aérofreinage et la stabilité du satellite et proposent des solutions pour conserver une efficacité d'aérofreinage malgré l'instabilité du satellite. En effet un satellite, après sa vie opérationnelle n'est plus maintenu sous contrôle par son opérateur : en général le satellite se met alors à tourner sur lui-même sous l'effet des différentes forces variables dans le temps: trainée aérodynamique, vent solaire, champs magnétique, champs de gravitation variable ; le satellite n'a plus une attitude stable sur son orbite, et la structure d'aérofreinage ne peut plus être orientée de façon optimale par rapport à la trajectoire dudit satellite. Or pour fonctionner efficacement la structure d'aérofreinage devrait être perpendiculaire en permanence à cette trajectoire. Pour pallier à l'instabilité qui ne permet pas cette perpendicularité, la structure de l'art antérieur est conçue pour fonctionner même dans le cas d'une mauvaise position du satellite par rapport à sa trajectoire. Ceci conduit toutefois à sur-dimensionner la structure d'aérofreinage ce qui grève le bilan de masse du satellite contrairement au cas où le satellite est stabilisé.

En outre, comme vu plus haut, l'aérofreinage utilise l'atmosphère résiduelle à haute altitude pour freiner un objet mais plus l'altitude est élevée, plus l'atmosphère est ténue, et donc moins le freinage est efficace. On dispose pour faire les calculs de modèles standards ou empiriques de la haute atmosphère comme les outils NRLMSISE-00 du laboratoire de recherche navale des USA, le CIRA édité par le COSPAR (Comité pour la recherche spatiale) ou Jacchia (L. G. Jacchia, Smithsonian Astrophysical Observatory Special Report N° 375, 1977).

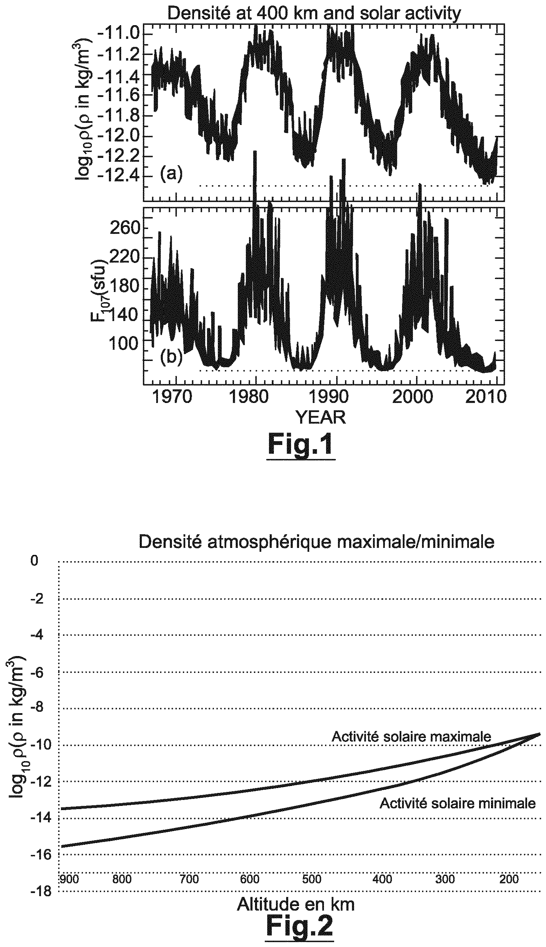

Il est constaté que les densités d'atmosphère dépendent en réalité de l'activité du soleil et sont corrélées aux cycles d'activités solaires comme représenté en figure 1 représentative de la densité atmosphérique à 400 km en fonction de l'activité solaire.

L'abscisse du tableau représente le temps tmp en années, la courbe inférieure représente le flux solaire radio à la longueur d'onde de 10,7 cm, mesuré en sfu - (Solar Flux Unit unité de flux solaire), 1 sfu = 10-22 W/m$^2$/Hz - et la courbe supérieure la densité exprimée selon une échelle logarithmique $\log_{10}\rho$, $\rho$ étant la densité exprimée en kg/m$^3$. On retrouve sur cette figure le cycle d'activité solaire de 11 ans bien connu.

L'impact de l'activité solaire est particulièrement important pour des altitudes supérieures à 500 km. La figure 2 représente les courbes de densité atmosphérique pour une activité solaire maximale courbe 1 et une activité solaire minimale courbe 2 avec l'altitude Alt en km en abscisse et la densité selon une échelle logarithmique $\log_{10}\rho$ en ordonnée. On voit sur cette figure que la densité atmosphérique varie de 1 à 10 à 400 km d'altitude et de 1 à 100 à 700 km en fonction des minimum/maximum d'activité solaire.

Du fait de ces variations de densité, il y a une très importante dispersion de la durée de rentrée lorsqu'on utilise des systèmes de désorbitation par aérofreinage. Pour un même satellite initialement sur une orbite circulaire à 720 km d'altitude, la durée de désorbitation peut varier de 20 ans, durée minimale, à 30 ans, durée maximale, selon que la date de début de la désorbitation se situe à un maximum ou a un minimum d'activité solaire. Cette dispersion de performances très importante est un handicap majeur dans l'application de Loi liée aux Opérations Spatiales exigeant une rentrée en moins de 25 ans.

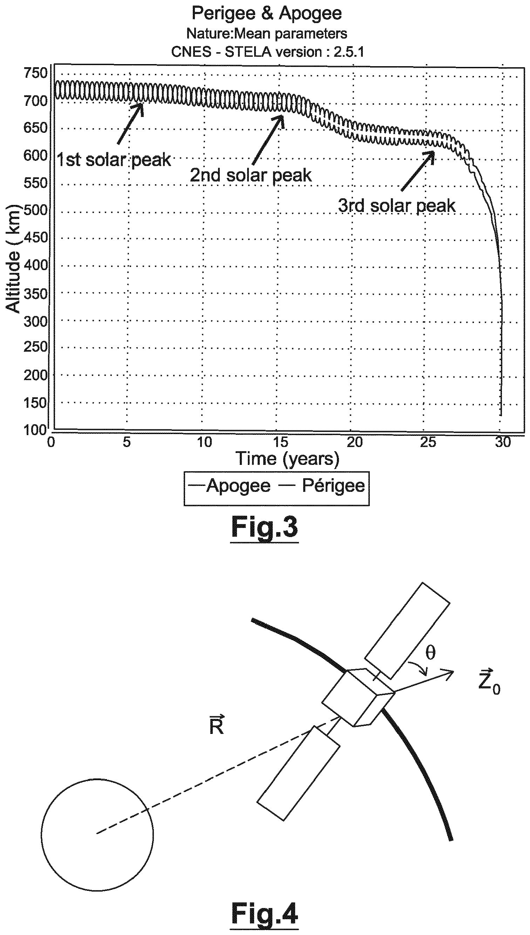

La figure 3 représente par exemple la modélisation des variations d'altitude en apogée 3 et périgée 4 d'un satellite pour un début de désorbitation lors d'un minimum solaire,) avec en abscisse le temps exprimé en années (Time (years)) et en ordonnée l'altitude en km. Durant les 30 ans de la désorbitation, on notera que le satellite voit 3 pics d'activité solaire "solar peak" en anglais sur la figure. Cette figure montre que la désorbitation est très lente à haute altitude et au contraire très rapide au dessous de 600Km. Ceci montre l'intérêt d'optimiser l'aérofreinage à haute altitude. Par ailleurs, on note chaque pic d'activité solaire est à l'origine d'une accélération significative de la désorbitation.

Cette modélisation est faite avec des outils bien connu tel l'outil logiciel STELLA du CNES (Centre National d'Etudes Spatiales, France).

Il est d'autre part connu de stabiliser un satellite par gradient de gravité. Cette technologie bien connue est basé sur un phénomène physique qui explique pourquoi la Lune présente toujours une même face à la Terre.

Cette stabilisation vient du fait que quand un objet en orbite autour de la Terre n'a pas une densité homogène, il est soumis à un couple de rappel, du fait de la variation du champ de gravité, qui a tendance à l'orienter de façon que sa partie la plus dense soit plus près de la Terre.

Cet effet a été utilisé pour stabiliser des satellites sur leur orbite, par exemple en leur ajoutant une poutre au bout de laquelle une masse est placée. Si le système est bien conçu, le satellite S à tendance à s'équilibrer, la poutre P se positionnant dans une direction passant par le centre de la Terre, le satellite étant près de la Terre, et la masse M à l'opposé comme représenté en figure 4.

Bien entendu, la situation réelle est un peu plus complexe et il existe de problèmes de stabilité. Il est possible de maitriser ces problèmes en particulier par le choix adapté de la longueur de la poutre et de la masse placée à son extrémité, en fonction de la masse du satellite et de son orbite.

Le document WO02/02402 A1 illustre ce principe et prévoit un petit panneau solaire en bout de mât pour compenser une torsion du mât.

Brève description de l'invention

La présente invention a pour but de proposer une solution simple et peu coûteuse en énergie du fait du peu de masse qu'elle ajoute pour permettre de garantir une désorbitation sur une durée maitrisée d'un satellite en fin de vie ou devant être inactivé. La présente invention propose en outre d'optimiser la réalisation d'un dispositif de désorbitation à voile d'aérofreinage pour en accroître son efficacité et réduire la dispersion des durées de désorbitation liées à la variation de la densité de l'atmosphère résiduelle en fonction du cycle solaire.

L'optimisation de l'efficacité de la voile d'aérofreinage lorsque l'on souhaite désorbiter le satellite consiste à la maintenir dans une position en permanence la plus perpendiculaire possible à la trajectoire du satellite. Ceci permet d'accroître le ratio efficacité/masse de la voile.

Pour ce faire, la présente invention propose un dispositif de désorbitation de satellite selon la revendication 1.

Le dispositif à gradient de gravité est avantageusement adapté à rappeler la surface d'aérofreinage dans une direction perpendiculaire à la trajectoire du satellite.

La surface d'aérofreinage est préférablement réalisée en sorte de conserver une surface efficace d'aérofreinage quelque soit l'orientation du satellite autour d'un axe parallèle à la direction satellite / centre de la planète.

Selon un second mode de réalisation particulier, la surface d'aérofreinage comporte trois panneaux disposés à 120° autour dudit axe.

L'invention s'applique à un satellite comportant un dispositif de désorbitation selon l'invention.

L'invention propose en outre un procédé de réalisation d'un satellite pourvu d'un dispositif de désorbitation tel que défini ci-dessus qui comprend les étapes de:

définition du lieu et de la direction d'implantation du mât destiné à supporter la voile d'aérofreinage sur le satellite;
modélisation de la rentrée du satellite avec un outil de modélisation en sorte de déterminer l'altitude de basculement du satellite qui correspond à l'altitude maximum qui permet de garantir une fin de rentrée en un temps donné;

- détermination par itérations et approximations successives de la surface Saero de la voile, la longueur m du mât et la masse à son extrémité tels que le point de basculement se situe approximativement à l'altitude déterminée précédemment avec la durée totale de rentrée choisie;
- retenue des solutions qui permettent de minimiser la masse totale du dispositif voile, masse et mât;
- définition de la voile réelle à un, deux ou trois panneaux de façon à ce qu'elle ait la longueur du mât et la surface Saéro définie précédemment.

Les itérations sont avantageusement faites en utilisant les relations

$$\overrightarrow{C^{gg}} = -\frac{3\mu}{R^3} * \left([I].\overrightarrow{Zo}\right) \wedge \overrightarrow{Zo}$$

$$\vec{F} = -\rho \frac{Saero}{m} C_D V^2 \frac{\vec{V}}{V}$$

et $C_{aero}$ = F.D.cos ($\varepsilon_y$).

Le mât peut notamment être défini perpendiculaire à la surface du satellite présentant la plus grande surface S2.

De manière alternative ou complémentaire, le mât peut être défini avec son axe passant par le centre de gravité du satellite.

Brève description des dessins

D'autres caractéristiques et avantages de l'invention seront apparents à la lecture de la description qui suit d'un exemple non limitatif de réalisation de l'invention en référence aux dessins qui représentent:

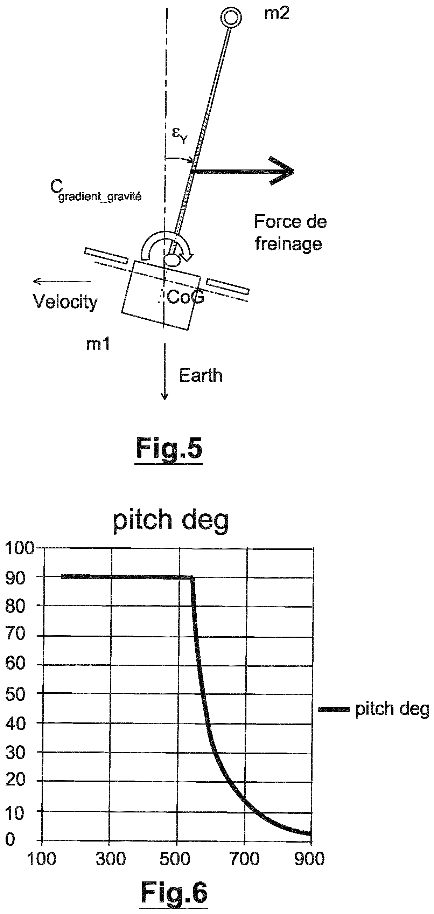

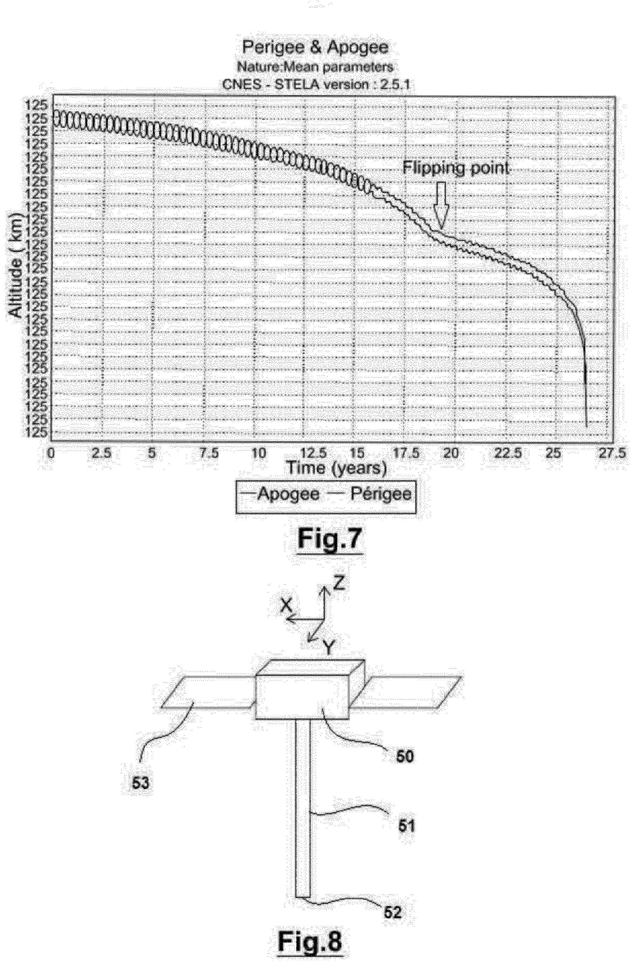

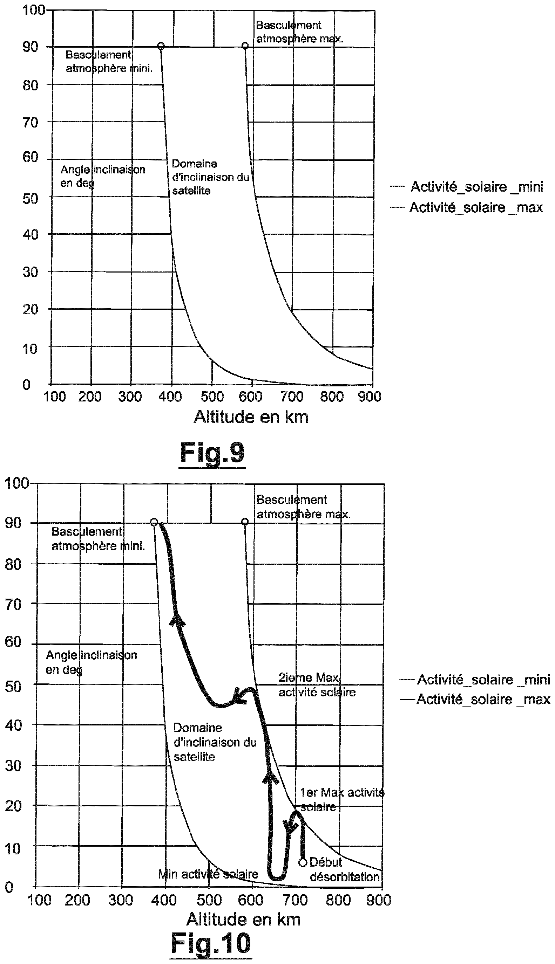

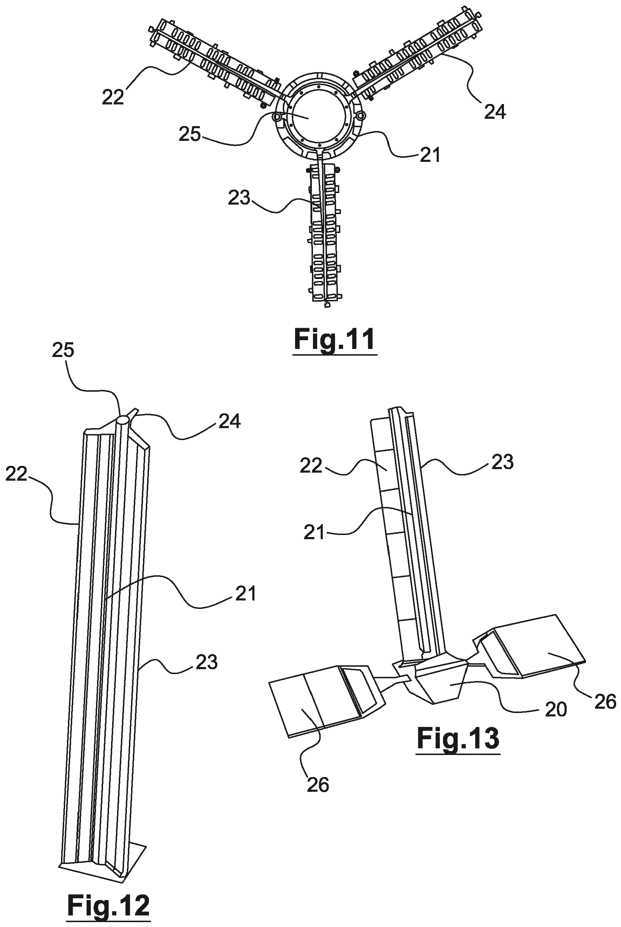

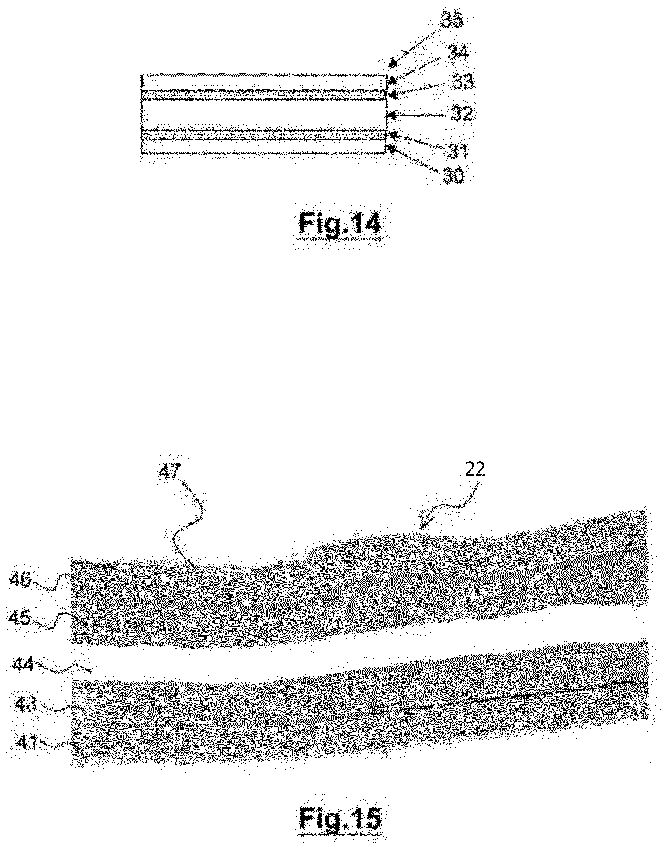

En Figure 1: un graphique montrant la corrélation entre la variation de densité à une altitude donnée en fonction du flux solaire;
En figure 2: un graphique montrant les densités minimale et maximale de l'atmosphère en fonction de l'altitude selon les minimum/maximum d'activité solaire;
En figure 3: un graphique de désorbitation le plus défavorable en altitude en fonction du temps pour un satellite donné;
En figure 4: une vue schématique du principe de stabilisation par gradient de gravité appliqué à un satellite;
En figure 5: une vue schématique d'un satellite utilisant le principe de stabilisation par gradient de gravité;
En figure 6: un graphique représentant l'angle de tangage d'un satellite selon l'invention en fonction de l'altitude;
En figure 7: un graphique représentant le profil de réentrée d'un satellite selon l'invention;
En figure 8: une vue schématique en perspective d'un satellite construit selon le principe de l'invention;
En figure 9: un graphique représentant l'inclinaison d'un satellite selon l'invention en fonction de l'activité solaire et prenant en compte l'équilibre entre le couple de rappel du gradient de gravité et le couple créé par la force aérodynamique sur une voile d'aérofreinage dudit satellite;
En figure 10: l'illustration d'un cas particulier de la figure 9;
En figure 11: une vue de dessus d'un exemple de voile d'aérofreinage pour un satellite de l'invention;
En figure 12: une vue en perspective de côté de la voile de la figure 11 ;
En figure 13: un satellite équipé d'une voile selon les figures 11 et 12;
En figure 14: un exemple de matériaux de réalisation d'un mât conforme à l'invention;
En figure 15: une vue en coupe d'une membrane de voile d'aérofreinage applicable à l'invention.

Description détaillée de modes de réalisation de l'invention

Le principe de l'invention consiste à équiper un satellite d'un système de désorbitation qui se déploie en fin de vie du satellite et qui combine un dispositif à gradient de gravité et une voile de désorbitation pour maintenir ladite voile dans une position générant une trainée importante adaptée à freiner le satellite et donc à lui faire perdre de l'altitude.

Le dispositif stabilise le satellite en fin de vie au moyen du dispositif à gradient de gravité, la voile et le dispositif à gradient de gravité étant conçus de façon à ce que la voile soit le plus perpendiculaire à la trajectoire malgré le couple de basculement dû à la traînée. En outre l'invention à pour but de concevoir la voile et le dispositif à gradient de gravité de façon que plus l'atmosphère résiduelle est dense, plus la voile s'écarte de cette position perpendiculaire mais reste dans le domaine de stabilité du système.

Le dispositif à gradient de gravité est plus particulièrement constitué d'un mât fixée sur le satellite et d'une masse déportée en bout de mât à l'opposée du satellite.

Idéalement, la voile et le dispositif à gradient de gravité sont combinés; par exemple cela peut être le cas sur la voile du type décrit dans le document FR 2 897 843 A1 qui s'étend le long d'un mât que l'on déploie lorsque l'on souhaite démarrer la désorbitation d'un satellite. La masse du dispositif à gradient de gravité permettant la stabilisation du satellite lors de sa désorbitation est placée à l'extrémité du mât portant la voile d'aérofreinage.

Par ailleurs, l'invention concerne aussi le fonctionnement de la voile d'aérofreinage à gradient de gravité, pendant l'évolution de l'orbite du satellite durant sa descente.

Selon la figure 4, la stabilisation par gradient de gravité consiste à appliquer sur le mât M fixé sur le satellite S

une force $Z_0$ de direction opposée à la direction T satellite-Terre.

La théorie du gradient de gravité est illustrée ci-dessous en référence à la figure 5.

Le couple $C_{gg}$ de gradient de gravité s'exerçant sur un satellite est donné par :

$$\overrightarrow{Cgg} = -\frac{3\mu}{R^3} * ([I].\overrightarrow{Zo}) \wedge \overrightarrow{Zo}$$

Avec:

$\mu$ : constante de gravité,

R : Distance satellite - centre de la Terre,

$Z_0$ : vecteur unitaire du repère orbital local, selon la direction Terre satellite, axe T, [I] : matrice d'inertie du satellite dans le repère du satellite qui comprend des axes d'inertie principaux $\vec{x}\,\vec{y}\,\vec{z}$ tels que définis à la figure 8, l'axe z étant de même direction et de sens opposé au mât.

On obtient ainsi un couple de rappel vers une position d'attitude stable du satellite. Les oscillations autour de la position d'équilibre sont naturellement amorties et dissipées par les appendices flexibles (mâts, voiles), les ballotements dans les réservoirs et le frottement atmosphérique.

La figure 5 représente un satellite de masse m1 comportant une surface aérodynamique déployée selon un mât 21 et une masse m2 en bout de mât.

Le gradient de gravité pousse à un alignement du mât et de la direction T de la Terre, le mât se positionnant à l'opposé de la Terre par rapport au corps du satellite.

Lorsque le satellite est muni d'une voile d'aérofreinage comportant une direction parallèle au mât et une surface aérodynamique perpendiculaire à la direction de la vitesse satellite, la surface aérodynamique déployée est presque normale au vecteur vitesse du satellite et crée une force de freinage maximale.

La force de freinage F est donnée par la relation :

$$\vec{F} = -\rho \frac{Saero}{m} C_D V^2 \frac{\vec{V}}{V}$$

avec:

$\rho$ : densité atmosphérique,

$S_{aero}$ : Surface aérodynamique d'aérofreinage (perpendiculaire à la trajectoire du satellite), surface de freinage dite aussi « efficace »

m : masse satellite,

$C_D$ : Coefficient aérodynamique,

V : vitesse satellite.

Le couple d'aérofreinage est alors: $C_{aero}$ = F.D.cos $(\varepsilon_y)$, D étant approximativement la demi-longueur du mât; $\varepsilon_y$ étant l'angle entre le mât et la direction terre satellite, angle d'équilibre du satellite subissant le couple d'aérofreinage $C_{aero}$ et le couple de gradient de gravité $C_{gg}$.

Il s'établit alors un équilibre entre le couple du gradient de gravité et le couple lié à l'application de la force de traîné au centre aérodynamique. Le concept de stabilisation de la voile permet donc de maximiser l'utilisation de la surface de d'aérofreinage disponible, en stabilisant le satellite et en en évitant les basculements du satellite sur lui même. Le satellite présente une surface aérodynamique totale variant avec l'angle de tangage $\varepsilon_y$. De façon approximative :

$$S_{aero} = S1.\cos(\varepsilon_y) + S2.\sin(\varepsilon_y)$$

Avec:

S1 : Surface principale d'aérofreinage ($S_{satellite}$ + $S_{déployée}$);

S2 : Surface secondaire après basculement du satellite Typiquement S1 > 10*S2.

On conçoit bien que quand la densité atmosphérique $\rho$ augmente, la force F augmente, et l'angle de tangage $\varepsilon_y$ également, ce qui réduit $S_{aero}$.

Au final, en stabilisant le satellite par le dispositif à gradient de gravité, on diminue les variations du produit $\rho * S_{aero}$, ce qui permet d'obtenir un découplage partiel des performances de freinage du satellite et de l'activité solaire à une altitude donnée. La variation de la durée de désorbitation dépend donc moins du cycle solaire, et la prévision de la désorbitation est en moyenne meilleure.

La combinaison d'une voile d'aérofreinage et d'un dispositif à gradient de gravité assurera donc une durée de désorbitation minimisant la dispersion de la durée de réentrée quel que soit le phasage de la date de début de désorbitation et des cycles solaires ou l'intensité des cycles solaires.

La figure 6 donne un exemple de variation de la courbe de l'angle de tangage ("pitch deg" en anglais) avec l'altitude, pour un profil d'atmosphère résiduelle moyen avec en abscisse l'altitude en km et en ordonnée l'inclinaison en tangage exprimée en degrés.

Ce tableau est donné pour un satellite de 250 kg équipé d'un mât de désorbitation de 8 m de hauteur comportant une voile réalisée avec trois panneaux de 8 m de hauteur, de 0,55 m de largeur et d'une masse de 0,54 kg chacun et disposés à 120° autour du mât.

On constate que plus la densité atmosphérique est importante, moins le couple de gradient de gravité peut compenser le couple de traînée: l'angle $\varepsilon_y$ augmente le satellite bascule jusqu'à ce que $\varepsilon_y$ atteigne 90°. Le satellite sur son orbite a alors atteint une seconde position d'équilibre et présente alors une surface aérodynamique constante $S_{aero}$ (S2) plus faible quelque-soit l'augmentation de densité atmosphérique.

On constate donc que dans ce cas de figure aussi le concept de stabilisation de la voile permet de maximiser l'utilisation de la surface d'aérofreinage disponible même en cas de basculement du satellite sur lui-même.

Par ailleurs, l'altitude dite de basculement où est atteinte cette deuxième position d'équilibre est également un critère de dimensionnement de la surface d'aérofreinage. La figure 7, représente les variations d'altitude en apogée 3' et périgée 4' d'un satellite stabilisé avec en abscisse le temps exprimé en années et en ordonnée l'altitude en km. Le basculement 5 (Flipping point en anglais) doit s'opérer à une altitude suffisamment basse, entre 500 et 550 Km et typiquement de l'ordre de 525 km, où le freinage atmosphérique est suffisamment élevé pour garantir une rentrée en quelques années (3-5 ans maximum), et pour que l'impact de variation d'activité solaire soit négligeable sur la durée de rentrée du satellite présentant une surface aérodynamique constante (S2). Le réglage de cette altitude de basculement est effectué en dimensionnant le couple de paramètre longueur mât et masse en extrémité de mât.

Un exemple concret de satellite est donné ci-après à titre d'exemple en référence à la figure 8.

Le cas de référence est un satellite 50 de 250 kg, un mât 51 de 9 m et une masse 52 en extrémité de mât de 3.5 kg. Les panneaux formant la voile représentés notamment déployés aux figures 11 à 13 sont des panneaux rectangulaires de 9 m x 0,55 m et d'une masse de 0,54 kg chacun s'étendant donc le long du mât. Le corps du satellite mesure 1m x 1m x 0,6m et comporte deux petits panneaux solaires 53 dans l'exemple de 1 m x 0,6m. Le couple de rappel du gradient de gravité est dans ce cas d'environ 1 mN.m.

La figure 9 permet de déterminer l'inclinaison I du satellite en degrés en ordonnée (0 à 100 degrés par divisions de 10°) par rapport à l'altitude A en km (100km à 900km par divisions de 100 km) en fonction de l'activité solaire en prenant en compte l'équilibre entre le couple de rappel du gradient de gravité et le couple crée par la force aérodynamique sur la membrane de la voile.

La courbe 8 de cette figure correspond à l'activité solaire minimale, la courbe 9 correspond à l'activité solaire maximale. Entre ces deux courbes se trouve le domaine d'inclinaison du satellite 10. Le point 6 correspond au basculement du satellite en atmosphère minimale (activité solaire minimale) et le point 9 au basculement avec atmosphère maximale (activité solaire maximale).

La figure 10 correspond à l'inclinaison d'un satellite en prenant l'exemple d'un début de désorbitation à 725 km avec une atmosphère de densité moyenne sur un cycle d'activité solaire montant. L'inclinaison du satellite en fonction de son altitude est donnée en considérant une désorbitation sur un peu plus d'un cycle solaire avec un premier maximum d'activité 12 et un second maximum d'activité 11 entre le début de désorbitation 14 et la fin de désorbitation 6.

En fonction de ces données, la masse en extrémité de mât est ajustée pour permettre d'assurer un basculement pour une altitude entre 500 et 550 km d'altitude dans le cas d'une activité solaire moyenne.

Ces valeurs sont données à titre d'exemple, un calcul précis étant à faire au cas par cas en fonction de la date de début de la désorbitation et des paramètres du satellite.

Les figures 11 et 12 présentent la réalisation d'un mât 21 du type discuté ci-dessus d'une longueur de 9 m. Le mât est porteur d'une masse 25 en tête de mât et porteur d'une voile de désorbitation comportant ici trois membranes 22, 23, 24 disposées à 120° autour du mât assurant à la fois la stabilisation par gradient de gravité et la désorbitation.

Le mât peut par exemple être un mât gonflable utilisant la technologie connue du document FR 2 877 315 A1 pour son déploiement en vue de la désorbitation du satellite.

La voile comporte trois panneaux de 9 m x 0,55 m s'étendant le long du mât et disposés à 120° autour du mât. Ces panneaux sont réalisés avec des membranes d'une masse de 0,54 kg qui assurent une efficacité du freinage quel que soit l'angle de lacet du satellite, compensant l'absence de stabilité en rotation autour du mât. Cette configuration assure une surface aérodynamique maximale de 9.6 m$^2$ incluant 9 m$^2$ de surface membranaire et 0,6 m$^2$ pour le satellite lorsque l'activité solaire est minimale avec une surface déployée totale de 16,2 m$^2$.

Il est toutefois possible de prévoir seulement deux membranes disposées en V avec entre elles un angle permettant un compromis entre la surface effective de freinage et la stabilisation du satellite autour de l'axe passant par le mât.

Une solution avec une voile cylindrique peut être considérée avec toutefois une moindre optimisation en terme de surface déployée.

La figure 13 représente un satellite 20 pourvu de panneaux solaires 26 et équipé du mât et de la voile des figures 11 et 12.

Les matériaux utilisés pour la fabrication du mât et des membranes sont les suivants :

Le mât comme représenté en figure 14 est un mât gonflable qui est réalisé à partir d'un laminé aluminium/film de polyimide (Kapton marque déposée) de 130 $\mu$m d'épaisseur avec revêtement SiOx de 250 g/m$^2$ pour réaliser une protection contre l'oxygène atomique présent en orbite basse.

Il comporte de l'intérieur vers l'extérieur un premier film polyimide interne 30, un premier adhésif polyester 31, une feuille d'aluminium 32, un second adhésif polyester 33, un second film polyimide 34 et le revêtement d'oxyde de silicium 35.

La membrane aérodynamique 22 représentée en coupe en figure 15 comporte un laminé aluminium/film de polyimide (aluminium/Kapton) d'environ 40 à 80 $\mu$m avec revêtement SiOx de 100 g/m$^2$.

D'une face à l'autre la membrane comprend un revêtement SiOx 41, un premier film polyimide 43 de 12 à 15 microns, une couche de colle 43 de 10 à 15 microns, une feuille d'aluminium de 14 à 15 microns, une seconde couche de colle 45, un second film polyimide 46 et une seconde couche de revêtement SiOx 47.

L'invention peut s'appliquer à des satellites de 100 à 500 kg volant en orbite LEO jusqu'à une altitude maximale 850 km environ.

En fonction de la masse du satellite et de son altitude de vol, le temps de désorbitation est obtenu en réglant la hauteur du mât déployé et la masse en extrémité de mât pour assurer une stabilisation de l'attitude par gradient de gravité et un basculement à une altitude inférieure à 550 km.

L'invention définie par les revendications n'est pas limitée à l'exemple représenté dans les figures, la position du mât notamment pouvant être modifiée et passer ou non par le centre de gravité du satellite.

Le procédé de définition d'une voile de désorbitation d'un satellite selon l'invention est le suivant (on suppose le satellite connu en terme de masse et de géométrie, ce qui définit en autre sa surface S2 d'aérofreinage à basse altitude, pour toutes les attitudes du satellite ;on suppose aussi que l'on cherche à garantir une rentrée en moins de 25 ans, et que l'altitude du satellite est du type 800Km):

- On définit le lieu et la direction d'implantation du mât destiné à supporter la voile d'aérofreinage, le mât étant typiquement, mais pas nécessairement, perpendiculaire à la surface du satellite présentant la plus grande surface S2, et l'axe du mât passant éventuellement mais pas obligatoirement par le centre de gravité du satellite pour simplifier les calculs;
- On modélise la rentrée du satellite avec un outil connu tel Stella du CNES, ce qui permet de déterminer l'altitude maximum qui permet de garantir une fin de rentrée en moins de 3 à 5 ans ; c'est à dire l'altitude de basculement du satellite;
- On procède ensuite par itérations et approximations successives, , pour déterminer la surface S$_{aero}$ de la voile, la longueur m du mât et la masse à son extrémité pour garantir :

  - Que le point de basculement se situe approximativement à l'altitude déterminée précédemment;
  - Que la durée totale de la rentrée est celle attendue

- On choisit les solutions qui permettent de minimiser la masse totale du dispositif, voile plus masse et mât;
- On définit ensuite la voile réelle à un, deux ou trois panneaux de façon à ce qu'elle ait la longueur du mât, et la surface S$_{aero}$ définie précédemment.

Les itérations sont faites avec un outil logiciel de type Stella du CNES, et en utilisant les relations en couples gradient de gravité et couple aérodynamique du type mentionnées précédemment.

Il y a lieu de noter qu'il est possible selon l'invention de viser des durées de rentrée plus courtes que 25 ans et des altitudes initiales différentes. Il faut alors adapter la durée des différentes phases en conséquence, sachant que l'homme du métier sait que des durées de rentrée très courtes depuis une altitude élevée ne sont pas possible raisonnablement avec une voile de surface et de masse acceptables.

**Revendications**

1. Dispositif de désorbitation de satellite (20) comportant une voile d'aérofreinage (22, 23, 24), le dispositif de désorbitation comportant un dispositif de maintien d'attitude du satellite à gradient de gravité, le dispositif à gradient de gravité comportant au moins un mât (21) portant la voile d'aérofreinage et dont une première extrémité est solidaire du satellite et dont la seconde extrémité est pourvue d'une masse (25), de sorte que ledit mât s'oriente dans une direction opposée à la direction (T) de la planète autour de laquelle orbite le satellite et la voile d'aérofreinage comportant au moins deux panneaux réalisés au moyen de membranes se déployant avec le mât et s'étendant le long du mât.

2. Dispositif de désorbitation de satellite selon la revendication 1 pour lequel le dispositif à gradient de gravité est adapté à rappeler la voile d'aérofreinage (22, 23, 24) dans une direction perpendiculaire à la trajectoire du satellite.

3. Dispositif de désorbitation de satellite selon la revendication 1 ou 2 pour lequel la voile d'aérofreinage (22, 23, 24) est réalisée en sorte de conserver une surface efficace d'aérofreinage quelle que soit l'orientation du satellite autour d'un axe parallèle à la direction (T) satellite / centre de la planète.

4. Dispositif de désorbitation de satellite selon la revendication 1, 2 ou 3 pour lequel la voile d'aérofreinage (22, 23, 24) comporte trois panneaux disposés à 120° autour dudit axe.

5. Satellite comportant un dispositif de désorbitation selon l'une quelconque des revendications 1 à 4.

6. Procédé de réalisation d'un satellite selon la revendication 5 comprenant les étapes de:

   définition du lieu et de la direction d'implantation du mât (21) destiné à supporter la voile d'aérofreinage (22, 23, 24) sur le satellite;
   modélisation de la rentrée du satellite avec un outil de modélisation en sorte de déterminer l'altitude de basculement du satellite qui correspond à l'altitude maximum qui permet de garantir une fin de rentrée en un temps donné;

   - détermination par itérations et approximations successives de la surface $S_{aero}$ de la voile, la longueur m du mât et la masse à son extrémité tels que le point de basculement se situe approximativement à l'altitude déterminée précédemment avec la durée totale de rentrée choisie;
   - retenue des solutions qui permettent de minimiser la masse totale du dispositif voile, masse et mât;
   - définition de la voile réelle à un, deux ou trois panneaux de façon à ce qu'elle ait la longueur du mât et la surface $S_{aero}$ définie précédemment.

7. Procédé selon la revendication 6 pour lequel les itérations sont faites en utilisant les relations

$$\overrightarrow{Cgg} = -\frac{3\mu}{R^3} * \left([I].\overrightarrow{Zo}\right) \wedge \overrightarrow{Zo}$$

;

$$\vec{F} = -\rho \frac{S_{aero}}{m} C_D V^2 \frac{\vec{V}}{V}$$

   et $C_{aero}$ = F.D.COS ($\varepsilon_y$).

8. Procédé selon la revendication 6 ou 7 pour lequel le mât (21) est défini perpendiculaire à la surface du satellite présentant la plus grande surface S2.

9. Procédé selon la revendication 6, 7 ou 8 pour lequel le mât (21) est défini avec son axe passant par le centre de gravité du satellite.

**Patentansprüche**

1. Satelliten-Deorbitierungsvorrichtung (20) mit einem Atmosphärenbremsflügel (22, 23, 24), wobei die Deorbitierungsvorrichtung eine Vorrichtung mit Schweregradienten zur Aufrechterhaltung der Lage des Satelliten enthält, wobei die Vorrichtung mit Schweregradienten mindestens einen Mast (21) enthält, der den Atmosphärenbremsflügel trägt und dessen erstes Ende fest mit dem Satelliten verbunden ist und dessen zweites Ende mit einer Masse (25) versehen ist, so dass der Mast in einer Richtung entgegengesetzt zur Richtung (T) des Planeten, um den der Satellit kreist, ausgerichtet ist, und der Atmosphärenbremsflügel zumindest zwei Paneele enthält, die mittels Membranen hergestellt sind, die sich mit dem Mast entfalten und sich entlang des Mastes erstrecken.

2. Satelliten-Deorbitierungsvorrichtung nach Anspruch 1, wobei die Vorrichtung mit Schweregradient dazu ausgelegt ist, den Atmosphärenbremsflügel (22, 23, 24) in einer Richtung senkrecht zur Umlaufbahn des Satelliten zurückzuholen.

3. Satelliten-Deorbitierungsvorrichtung nach Anspruch 1 oder 2, wobei der Atmosphärenbremsflügel (22, 23, 24) so ausgebildet ist, dass er eine wirksame Atmosphärenbremsfläche aufrechterhält, unabhängig von der Ausrichtung des Satelliten um eine Achse, die parallel zur Richtung (T) Satellit/Planetenmitte ist.

4. Satelliten-Deorbitierungsvorrichtung nach Anspruch 1, 2 oder 3, wobei der Atmosphärenbremsflügel (22, 23, 24) drei um 120° um die genannte Achse angeordnete Paneele enthält.

5. Satellit mit einer Deorbitierungsvorrichtung nach einem der Ansprüche 1 bis 4.

6. Verfahren zum Herstellen eines Stalliten nach Anspruch 5, umfassend die Schritte:

   - Definition der Lage und Richtung der Anordnung des Mastes (21), der den Atmosphärenbremsflügel (22, 23, 24) am Satelliten tragen soll;
   - Modellierung des Wiedereintritts des Satelliten mit einem Modellierungswerkzeug, um die Neigungshöhe des Satelliten zu bestimmen, die der maximalen Höhe entspricht, bei der es möglich ist, die Beendigung des Wiedereintritts in einer bestimmten Zeit zu gewährleisten;
   - Bestimmung durch aufeinanderfolgende Iterationen und Annäherungen der Fläche $S_{aero}$ des Flügels, der Länge m des Mastes und der Masse an seinem Ende, so dass der Neigungspunkt ungefähr auf der Höhe liegt, die zuvor mit der gewählten gesamten Wiedereintrittsdauer bestimmt wurde;
   - Beibehaltung von Lösungen, die die Gesamtmasse der Einrichtung aus Flügel, Masse und Mast minimieren;
   - Definition des reellen Flügels mit einem, zwei oder drei Paneelen derart, dass er die Länge des Mastes und die zuvor definierte Fläche $S_{aero}$ hat.

7. Verfahren nach Anspruch 6, wobei die Iterationen erfolgen unter Verwendung der Beziehungen

$$\overrightarrow{Cgg} = -\frac{3\mu}{R^3} * \left([I].\overrightarrow{Zo}\right) \wedge \overrightarrow{Zo}$$

;

$$\vec{F} = -\rho \frac{Saero}{m} C_D V^2 \frac{\vec{V}}{V}$$

und $C_{aero} = F.D.\cos(\varepsilon y)$.

8. Verfahren nach Anspruch 6 oder 7, wobei der Mast (21) senkrecht zur Satellitenoberfläche definiert ist, die die größte Fläche S2 aufweist.

9. Verfahren nach Anspruch 6, 7 oder 8, wobei der Mast (21) so definiert, dass seine Achse durch den Schwerpunkt des Satelliten verläuft.

**Claims**

1. A satellite deorbiting device (20) including an aerobraking sail (22, 23, 24), the deorbiting device including a gravity gradient device for holding the attitude of the satellite, the gravity gradient device including at least one mast (21) carrying the aerobraking sail and a first end of which is integral with the satellite and the second end of which is provided with a mass (25), so that said mast orients itself in a direction opposite to the direction (T) of the planet around which the satellite orbits and the aerobraking sail including at least two panels made by means of membranes deploying with the mast and extending along the mast.

2. The satellite deorbiting device according to claim 1, wherein the gravity gradient device is adapted to bring back the aerobraking sail (22, 23, 24) in a direction perpendicular to the trajectory of the satellite.

3. The satellite deorbiting device according to claim 1 or 2, wherein the aerobraking sail (22, 23, 24) is made so as to keep an effective aerobraking area whatever the orientation of the satellite about an axis parallel to the satellite/centre of the planet direction (T).

4. The satellite deorbiting device according to claim 1, 2 or 3, wherein the aerobraking sail (22, 23, 24) includes three panels disposed at 120° about said axis.

5. A satellite including a deorbiting device according to any of claims 1 to 4.

6. A method for making a satellite according to claim 5, comprising the steps of:

   - defining the place and direction of implantation of the mast (21) for supporting the aerobraking sail (22, 23, 24) on the satellite;
   - modelling the re-entry of the satellite with a modelling tool so as to determine the flipping altitude of the satellite which corresponds to the maximum altitude enabling a re-entry termination to be ensured within a given time;
   - determining by successive iterations and approximations the area $S_{aero}$ of the sail, the length m of the mast and the mass at its end such that the flipping point lies approximately at the previously determined altitude with the selected re-entry total duration;
   - choosing solutions which enable the total mass of the sail device, mass and mast to be minimized;
   - defining the actual sail with one, two or three panels so that it has the length of the mast and the previously defined area $S_{aero}$.

7. The method according to claim 6, wherein the iterations are made using the following relationships

$$\overrightarrow{Cgg} = -\frac{3\mu}{R^3} * \left([I].\overrightarrow{Zo}\right)\wedge\overrightarrow{Zo}$$

;

$$\vec{F} = -\rho\,\frac{S_{aero}}{m}\,C_D V^2\,\frac{\vec{V}}{V}$$

and $C_{aero} = F.D.\cos(\varepsilon\gamma)$.

8. The method according to claim 6 or 7, wherein the mast (21) is defined perpendicular to the area of the satellite having the largest area S2.

9. The method according to claim 6, 7 or 8, wherein the mast (21) is defined with its axis passing through the centre of gravity of the satellite.

Densité at 400 km and solar activity

**Fig.1**

Densité atmosphérique maximale/minimale

**Fig.2**

Perigee & Apogee
Nature:Mean parameters
CNES - STELA version : 2.5.1

1st solar peak

2nd solar peak

3rd solar peak

Time (years)

Altitude ( km )

Apogee — Périgee

**Fig.3**

$\theta$

$\vec{Z}_0$

$\vec{R}$

**Fig.4**

**Fig.5**

## pitch deg

**Fig.6**

EP 3 253 655 B1

Perigee & Apogee
Nature:Mean parameters
CNES - STELA version : 2.5.1

**Fig.7**

**Fig.8**

14

Fig.9

Fig.10

**Fig.11**

**Fig.12**

**Fig.13**

**Fig.14**

**Fig.15**

**EP 3 253 655 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2897842 A1
- FR 2897843 A1
- WO 0202402 A1
- FR 2877315 A1

**Littérature non-brevet citée dans la description**

- **L. G. JACCHIA.** *Smithsonian Astrophysical Observatory Special Report N° 375,* 1977